# EUROPÄISCHE PATENTSCHRIFT

(11) **EP 2 188 105 B1**
(45) Veröffentlichungstag und Bekanntmachung des Hinweises auf die Patenterteilung: **24.01.2018**
(21) Anmeldenummer: 08787134.9
(22) Anmeldetag: 12.08.2008
(51) Int. Cl.: B29C 47/76, B29C 47/46

(54) **ANORDNUNG DES ANTRIEBS BEI EINEM ENTGASUNGSEXTRUDER**
DRIVE ARRANGEMENT IN A DEGASSING EXTRUDER
AGENCEMENT DE L'ENTRAÎNEMENT DANS UNE EXTRUDEUSE-DÉGAZEUSE

(30) Priorität: 20.09.2007 DE 102007045155
(43) Veröffentlichungstag der Anmeldung: 26.05.2010
(73) Patentinhaber: Evonik Röhm GmbH, 64293 Darmstadt (DE)
(72) Erfinder: CARLOFF, Rüdiger, 64291 Darmstadt (DE); HEID, Joachim, 64407 Fränkisch-Crumbach (DE); VETTER, Heinz, 64380 Rossdorf (DE)
(86) Internationale Anmeldenummer: PCT/EP2008/060576
(87) Internationale Veröffentlichungsnummer: WO 2009/040190

(56) Entgegenhaltungen:
- EP-A- 0 723 850
- WO-A1-94/07684
- DE-A1- 1 629 711
- US-A- 3 156 009
- US-A- 3 383 015
- US-A- 3 787 160
- US-A- 3 797 550
- US-A- 5 887 972

## Beschreibung

### Gebiet der Erfindung

Die Erfindung betrifft einen Entgasungsextruder zur Entgasung eines Polymermaterials, gemäß Anspruch 1. Bei Polymerisationsprozessen wird die Polymerisation häufig in einem Lösungsmittel durchgeführt. Dabei kann das Lösungsmittel zum einen die Monomerlösung selbst oder auch ein inertes Lösungsmittel sein. Zur Vereinfachung des Sprachgebrauchs soll der Begriff "Lösungsmittel" auch die Monomere mit umfassen. Um das Polymer zu erhalten, müssen die Restmonomere oder das Lösungsmittel, z. B. durch Verdampfung, abgetrennt werden. Eine solche Entgasung erfolgt üblicherweise in einem Entgasungsextruder.

### Stand der Technik

Bekannte Entgasungsextruder sind üblicherweise so aufgebaut, dass der zu entgasende Materialstrom auf der Antriebsseite der Extruderschnecke zugeführt wird und das entgaste Extrudat zur Schneckenspitze hin gefördert wird. Dabei erfolgt nach einem Druckaufbau im Extruder stromabwärts der Materialeinspeisung eine Druckentlastung des Materials, bei welcher eine Entgasung bei Atmosphärendruck oder unter Zuhilfenahme von Vakuum erfolgt. Ein Entgasungsextruder gemäß dem Oberbegriff des Anspruchs 1 beschreibt die US 3383015 A. Ein Einschnecken-Entgasungsextruder der eingangs genannten Art ist beispielsweise in der EP 0 490 359 beschrieben. Der dort beschriebene Extruder umfaßt eine Extrudergehäuse, welches einen Extruderzylinder bildet und eine in dem Extruderzylinder drehbeweglich gelagerte Extruderschnecke. Die Materialeinspeisung in Form eines Einlaßtrichters ist wie üblich antriebsseitig an dem Extrudergehäuse vorgesehen. Die Entgasung erfolgt stromabwärts der Materialeinspeisung. Die Extruderschnecke weist in dem Entgasungsbereich eine stark verminderte Gangzahl auf, so dass in an sich bekannter Weise zusätzlicher Raum für die Extrudatexpansion zur Verfügung steht. Hinter der Entgasungszone, unmittelbar vor dem Extrudataustrag, weist die Extruderschnecke einen Bereich erhöhter Gangzahl auf, der in dem Bereich der Auslaßöffnung wiederum einen Druckanstieg bewirkt.

Der Extruder gemäß EP 0 490 359 A1 dient zur Entgasung von Polystyrol zwecks Herstellung von Lebensmittelverpackungen, die einen gewissen Grenzwert für Restmonomere nicht überschreiten dürfen. Das in den Extruder eingespeiste Material ist verhältnismäßig hochviskos.

Zur Verwendung in einem Polymerisationsprozeß ist der bekannte Extruder allerdings weniger geeignet. Wie eingangs bereits erwähnt, wird die Polymerisation häufig in einem Lösungsmittel durchgeführt. Das dem Extruder zugeführte Material ist niedrigviskoser, so dass die Abdichtung des Schneckenantriebs gegen die abgetrennten Monomere und/oder gegen Lösungsmittel entsprechend ausgelegt sein muss. Hierfür gibt es aufwändig konstruierte Gleitringdichtungen. Polymer, das während der Entgasung in den Bereich zwischen der Wellenabdichtung und der Aufgabestelle des Polymersirups gelangt, wird von dort nur langsam wieder weggeführt, wenn es auf dem Schneckenkern sitzt. Die hohe Verweilzeit des Polymers im Bereich zwischen der Abdichtung des Schneckenantriebs und der Materialeinspeisung führt bei hohen Temperaturen zur Zersetzung des Polymers. Zersetzte Polymerreste, die wieder in den Polymerhauptstrom gelangen, führen zur Beeinträchtigung der Qualität des Produkts.

Um das Abdichtungsproblem zum Getriebe hin zu Lösen, wurde neben der Gleitringdichtung auch das Spülen des Raumes vor dem Getriebe mit Inertgas vorgeschlagen. Diese Ausführungsform wird zum Beispiel in JP 2003 348300 beschrieben. Dieser Lösungsvorschlag hat allerdings den Nachteil, dass bei großen Monomer- und/oder Lösungsmittelströmen ein hoher Inertgasstrom notwendig ist. Diese Ausführungsform führt damit zu hohen Betriebs- und Investitionskosten, da das Inertgas im Monomer und/oder Lösungsmittelgas den Wärmeübergang bei der Kondensation dieser Gase reduziert. Es werden damit große Wärmetauscherflächen benötigt.

Eine weitere Möglichkeit das Getriebe gegen die Monomer und/oder Lösungsmitteldämpfe abzudichten, ist die Schmelzerückführung in den Bereich zwischen Entgasung und Getriebe. Eine solche Ausführungsform wird in DE 40 17 724 C1 beschrieben. Ein Teilstrom des entgasten Polymerstromes wird über eine größere Länge des Extruders extern oder im Extruderzylinder in den Bereich zwischen Antrieb und Entgasungsöffnung geführt und dort auf die Schnecke gegeben. Die Schnecke fördert in diesem Bereich den Teilstrom wieder stromabwärts. Der Antrieb ist dadurch durch die Schmelze von den niedrig viskosen Dämpfen getrennt. Nachteilig bei dieser Ausführung ist, dass ein entgaster Teilstrom über eine längere Strecke zum anderen Ende des Extruders geführt wird. Das einmal entgaste Produkt wird dann erneut durch den gesamten Extrusionsraum zum Austrag zurückgefahren. Diese Mehrfachbelastung von Polymeren führt in der Regel zu einer Verschlechterung der optischen Eigenschaften des Produktes durch die längere thermische Belastung.

### Aufgabe

Der Erfindung liegt daher die Aufgabe zugrunde, einen Entgasungsextruder der eingangs genannten Art diesbezüglich zu verbessern.

### Lösung

Die Aufgabe wird gelöst durch einen Entgasungsextruder zur Entgasung eines Polymermaterials, umfassend wenigstens einen Antrieb, wenigstens einen Extruderzylinder, wenigstens eine drehbar angetriebene, in dem Extruderzylinder gelagerte Extruderschnecke, wenigstens eine erste Materialeinspeisung, wenigstens einen Extrudataustrag, wenigstens eine Entgasungszone und wenigstens einen Gasaustrag, wobei sich der Entgasungsextruder gemäß der Erfindung dadurch auszeichnet, dass der Antrieb im Bereich des, bezogen auf die Förderrichtung des Polymers, stromabwärts gelegenen Endes der Extruderschnecke vorgesehen ist und eine zweite Materialeinspeisung in den Entgasungsextruder im Bereich des stromabwärts gelegenen Endes vorgesehen ist, wobei sich die zweite Materialeinspeisung in den Entgasungsextruder stromabwärts des Extrudataustrags befindet, wobei
die zweite Materialeinspeisung ihre entgaste Schmelze durch einen im Bereich des Extrudataustrags abgezweigten Teilstrom und/oder durch einen im Extruderzylinder stromaufwärts des Extrudataustrags abgezweigten Teilstrom und/oder durch einen aus der Extrudataustragsleitung abgezweigten Teilstrom erhält.

Dies hat den Vorzug, dass der Antrieb nur gegen polymeres Material abgedichtet werden muss, das im Verhältnis zu Monomer und Lösungsmittel eine höhere Viskosität aufweist. Darüber hinaus muss die Abdichtung des Antriebs nicht gegen das verwendete Lösungsmittel beständig sein.

Die Erfindung kann dahingehend zusammengefaßt werden, dass der Antrieb der Extruderschnecke in einem Bereich derselben vorgesehen ist, in dem nur polymeres Material ansteht, so dass eine entsprechend einfachere Konstruktion der Abdichtung möglich ist. Die Erfindung beschreibt daher den Weg, den Antrieb an eine Stelle des Extruders zu verlegen, wo das Polymer bereits weitestgehend entgast ist, und zwar obwohl erwartungsgemäß dort der Druckaufbau durch die Schleppströmung im Extruder am höchsten ist.

Erfindungsgemäß ist es vorgesehen, dass die Extruderschnecke an ihrem stromabwärts gelegenen Ende angetrieben ist.
Zweckmäßigerweise ist dabei der Extrudataustrag, bezogen auf die Längsachse des Extruders, radial und/oder tangential vorgesehen.

Ebenfalls zweckmäßig ist es, wenn der Extrudataustrag stromaufwärts des Antriebs angeordnet ist, aber stromabwärts von der Dosierstelle des zu entgasenden Polymersirups.

Bei einer bevorzugten Variante des Entgasungsextruders ist vorgesehen, dass die Extruderschnecke wenigstens zwei Bereiche entgegengesetzt fördernder Gangprofile aufweist, so dass in dem an den Antrieb angrenzenden Bereich der Extruderschnecke ein Rückfördergewinde vorgesehen ist, welches eine Abdichtung auf der Antriebsseite des Extruders gewährleistet. Dieses Rückfördergewinde bewirkt eine Schmelzerückführung und verhindert einen Materialstau im Bereich des Extruderzylinders stromabwärts des Extrudataustrags.

Vorzugsweise ist der Extrudataustrag am von der ersten Materialeinspeisung stromabwärts gelegenen Ende des stromabwärts fördernden Bereichs (17) der Extruderschnecke vorgesehen, so dass sowohl der Hauptförderstrom als auch die Schmelzerückführung in den Extrudataustrag gelangen.

Im Bereich zwischen den entgegengesetzt geschnittenen und fördernden Schneckenprofilen ist ein Stauring und/oder eine Durchmesseränderung des Schneckenkerns vorgesehen.

Gemäß der Erfindung ist es vorgesehen, dass eine zweite Materialeinspeisung in den Extruderzylinder im Bereich des stromabwärts gelegenen Endes vorgesehen ist. An dieser Stelle ist es sinnvoll, bereits entgastes Polymer in den Extruder einzuspeisen, so dass die dort eingeführte Schmelze das stromabwärtige Ende der Extruderschnecke zwischen Extrudataustrag und Antrieb kontinuierlich mit Polymer im Gegenstrom zum Hauptstrom spült. Hierdurch werden Polymerablagerungen in diesem Abschnitt der Extruderschnecke zuverlässig vermieden. Solche Ablagerungen könnten bei plötzlicher Ablösung zur Verfärbung des im Extrudataustrag befindlichen Hauptmaterialstroms führen.

In diesem Bereich der Extruderschnecke kann eine separate Kühlung und/oder Beheizung der Schnecke und/oder des Extruderzylinders vorgesehen sein, um die Viskosität der Schmelze in diesem Bereich günstig zu beeinflussen. Beispielsweise kann dieser Bereich der Extruderschnecke axial von einem geschlossenen Dampfkanal durchsetzt sein, der eine Teilfüllung einer verdampfbaren Flüssigkeit aufweist. Selbstverständlich kann ein weiterer Dampfkanal in dem Bereich der Extruderschnecke mit entgegengesetzter Gangsteigung vorgesehen sein. In den Bereichen, in denen sich die Extruderschnecke abkühlt, sorgt eine Kondensation des Dampfes in dem Dampfkanal aufgrund von frei werdender Kondensationswärme zu einer Beheizung, wohingegen eine Verdampfung aufgrund von zu hoher Temperatur zu einer Kühlung führt.

Auch kann im Bereich entgegengesetzter Gangsteigung der Schnecke über eine axiale Bohrung von außen Kühlmedium und/oder Heizmedium zugeführt werden, das die Schnecke von innen durchströmt.

Des Weiteren ist es gemäß der Erfindung vorgesehen, dass die zweite Materialeinspeisung an den Extruderzylinder stromabwärts des Extrudataustrags, d. h. in Förderrichtung des Polymers hinter dem Extrudataustrag an diesen angeschlossen ist. Diese Einspeisestelle erhält ihre vorzugsweise entgaste Schmelze durch einen im Bereich des Extrudataustrags abgezweigten Teilstrom und/oder durch einen dem Extruderzylinder stromaufwärts des Extrudataustrags abgezweigten Teilstrom. Auf diese Art und Weise wird ein Teil des entgasten Polymerstroms an einer Stelle des Extruders abgezweigt und in dem Bereich der Schmelzerückführung wieder eingespeist. Eine weitere Möglichkeit ist die zweite Materialeinspeisestelle mit Polymer aus einem zweiten Extruder zu versorgen.

Alternativ hierzu wäre es möglich, beispielsweise aus einem parallelen Polymerisationsprozeß entgastes Polymer abzuzweigen und an der entsprechenden Stelle des Extruders einzuspeisen.

Die Größe des zweiten Materialeinspeisestromes lässt sich durch eine geeignete Wahl des Durchmessers der Einspeiseleitungen und/oder des Einspeisequerschnitts, und/oder des Abzweigquerschnitts einstellen. Alternativ ist es möglich die Größe des zweiten Materialeinspeisestroms durch Ventile und/oder Pumpen und/oder andere Stellorgane und/oder einen zweiten Extruder einzustellen.

Die Gasaustritte des Extruders können an verschiedenen Stellen vorgesehen sein, beispielsweise können die zu verdampfenden Komponenten in Förderrichtung des Polymers nach oben oder zur Seite abgeführt werden. Der Gasaustritt wäre dann stromabwärts der Materialeinspeisung vorzusehen. Alternativ kann auch ein Teil des bei der Entgasung anfallenden Gases stromaufwärts der ersten Materialeinspeisung abgeführt werden. Der Gasaustritt wäre dann stromaufwärts der ersten Materialeinspeisung. Dies wird insbesondere im Zusammenhang mit der erfindungsgemäßen Ausgestaltung des Extruders als besonders vorteilhaft angesehen.

Die Erfindung wird nachstehend anhand eines Ausführungsbeispiels unter Zuhilfenahme der beigefügten Zeichnungen erläutert.

Es zeigen:
- Figur 1: eine schematische Darstellung des Entgasungsextruders mit einer daran angeschlossenen Kondensationskammer und ohne Antrieb, teilweise im Schnitt, und
- Figur 2: eine schematische Darstellung des Entgasungsextruders gemäß der Erfindung mit Getriebe und Motor, jedoch ohne die angeschlossene Kondensationskammer.

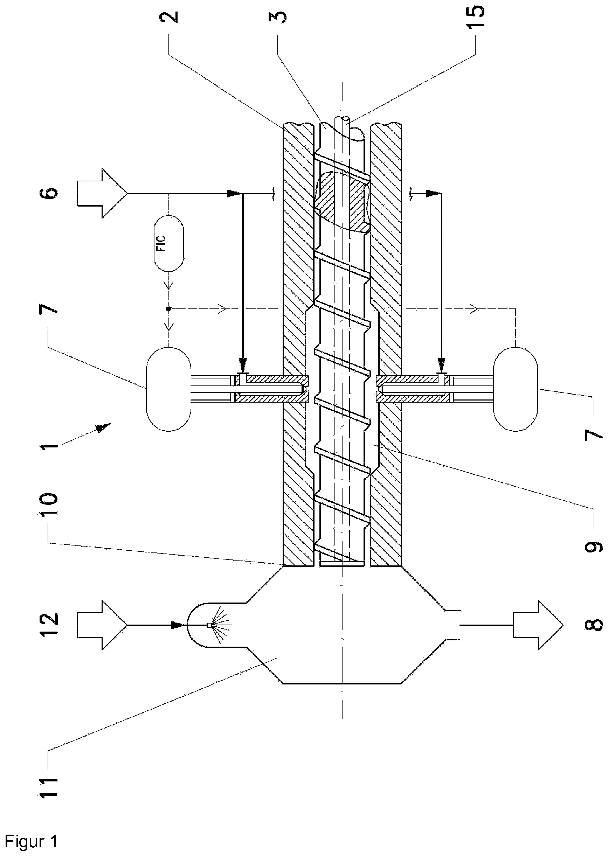

Figur 1 zeigt nur einen Teil des mit (1) bezeichneten Entgasungsextruders. Der Entgasungsextruder (1) umfaßt einen Extruderzylinder (2) sowie eine in dem Extruderzylinder (2) drehbar gelagerte Extruderschnecke (3). Die Extruderschnecke (3) wird von einem Antrieb (4) über ein zwischengeschaltetes Getriebe (5) in Drehung versetzt.

Als Antrieb (4) kann beispielsweise ein Elektromotor vorgesehen sein.

Wie bereits vorstehend erwähnt, sind der Antrieb (4) und das Getriebe (5) in der Figur 1 nicht dargestellt, diese befinden sich in der Zeichnung rechts. Das Polymer/Monomer-Gemisch wird über eine sich verzweigende Speiseleitung (6) an mindestens zwei einander diametral gegenüberliegenden Stellen des Extruderzylinders (2) über Einspeiseventile (7) dem Extruderzylinder (2) zugeführt.

Der Entgasungsextruder 1 gemäß der Erfindung ist als sog. "Einschneckenextruder" ausgebildet, dieser könnte allerdings auch als Doppelschneckenextruder ausgebildet sein.

Der Extrusionszylinder (2) ist im Bereich der Einspeiseventile (7) querschnittlich erweitert, d. h. dessen Innendurchmesser ist etwa um den Faktor 1,01 bis 3 größer als der reguläre Innendurchmesser des Extruderzylinders (2) außerhalb dieses Bereichs. Dort entspricht der Innendurchmesser des Extruderzylinders (2) etwa dem Außendurchmesser des Schneckengangs der Extruderschnecke (3) (unter Berücksichtigung etwaiger Toleranzen). Der Bereich größeren Innendurchmessers des Extruderzylinders (2) definiert die Entgasungszone. Über die Speiseleitung (6) werden das Monomer/Polymer-Gemisch und/oder ein Lösungsmittel/Polymer-Gemisch unter Druck und Temperatur in den Extruderzylinders (2) eingespeist. In der Entgasungszone (9) findet eine starke Druckreduzierung statt, so dass das Monomer und/oder das Lösungsmittel aus dem Polymer entgasen können. Darüber hinaus wird in diesem Bereich die Strömungsgeschwindigkeit des Materials verringert. Das Polymer wird in der Zeichnung nach rechts in Richtung Antrieb gefördert. Die in diesem Zusammenhang verwendeten Begriffe "stromabwärts" und "stromaufwärts" beziehen sich immer auf die Förderrichtung des Polymers.

Das in der Entgasungszone (9) anfallende Gas bzw. der dort anfallende Dampf wird in der Zeichnung nach links, also stromaufwärts der Einspeiseventile (7) gefördert.

Das stromaufwärts gelegene Ende (10) des Extruderzylinders (2) ist stirnseitig offen und mündet in eine Kondensationskammer (11), in die das in der Entgasungszone (9) angefallene Gas als überhitzter Dampf einströmt.

Mit (12) ist eine Einsprühung einer Flüssigkeit bezeichnet, über die das Gas und/oder der Dampf in der Kondensationskammer abgekühlt und kondensiert wird. Die verwendete Flüssigkeit ist zweckmäßigerweise mit dem Polymer mischbar, so dass ein etwaiger Polymermitriß in der Flüssigkeit gelöst wird. Alternativ oder zusätzlich können andere Mittel zur Kondensation eingesetzt werden wie z.B. Wärmetauscher und /oder Kondensatoren.

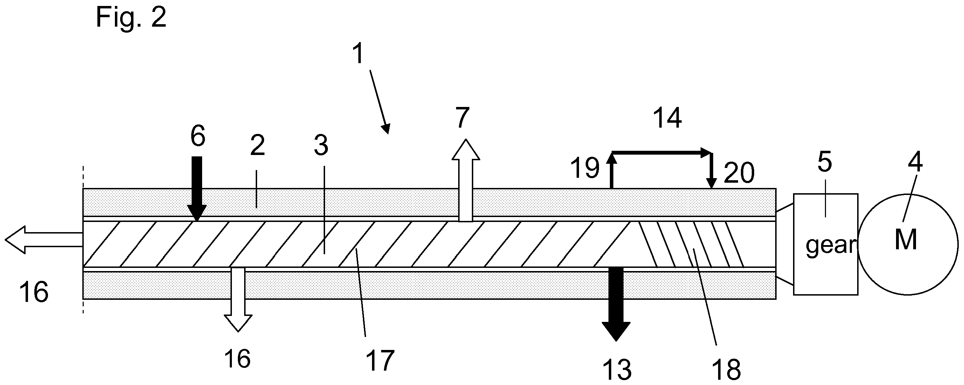

Wie dies in Figur 2 dargestellt ist, ist der Antrieb (4) stromabwärts der Einspeiseventile (7) angeordnet, d.h. das Polymer wird von der Extruderspitze/Schneckenspitze in Richtung Antriebsseite gefördert.

Wie der Figur 2 weiterhin zu entnehmen ist, besitzt der Entgasungsextruder (1) gemäß der Erfindung einen tangentialen bzw. radialen Extrudataustrag (13) an seinem von der Einspeisestelle (6) stromabwärts liegenden Ende.

Wie aus Figur 1 ersichtlich ist, ist die Extruderschnecke axial von einem geschlossenen Dampfkanal (15) durchsetzt, der eine Teilfüllung einer verdampfbaren Flüssigkeit aufweist. Die Verdampfung von Lösungsmittel oder Monomer führt im Dosierbereich des Extruders zu einer starken Abkühlung des Polymers. Die verdampfbare Flüssigkeit kann beispielsweise Wasser oder eine inerte, verdampfbare Flüssigkeit, wie beispielsweise ein Siedeöl, sein. Mit Hilfe des Dampfkanals kann das stark abgekühlte Polymer auf der kurzen Strecke wieder erwärmt werden, wenn dort die Flüssigkeit im Dampfkanal (15) kondensiert. Der Dampfkanal (15) stellt neben der Beheizung des Extruderzylinders im Einspeisebereich und der Reibungswärme der Extruderschnecke (3) eine zusätzliche Wärmequelle für die (teil)entgaste Schmelze im Einspeisebereich des Sirups dar. Damit kann durch diese Ausführung der Durchsatz auf dem Extruder maximiert werden. Im Bereich des Extrudataustritts (13) kühlt die Verdampfung innerhalb der Extruderschnecke die Schmelze bzw. das Extrudat.

Überschüssige Reibungswärme kann abgeführt werden, was sich schonend auf das Produkt auswirkt.

Bei dem Entgasungsextruder (1) gemäß der Erfindung, sind der Antrieb (4) und das Getriebe (5) an dem in Förderrichtung des Polymers stromabwärts gelegenen Ende des Entgasungsextruders 1, d. h. an dem von einer ersten Materialeinspeisung (6) entgegengesetzten Seite vorgesehen.

Die Extruderschnecke (3) umfaßt einen ersten Gewindeabschnitt (17), bei dem das Gangprofil so ausgerichtet ist, dass in dem Extruderzylinder (2) eine Förderung der Schmelze von der ersten Materialeinspeisung (6) in Richtung auf den Extrudataustrag (13) erzeugt wird.

Der Extrudataustrag (13) des Entgasungsextruders (1) ist in Bezug auf die Längsachse der Extruderschnecke (3) radial oder tangential ausgerichtet, so dass das Polymer stromaufwärts des Getriebes (5) und des Antriebs (4) ausgetragen wird.

Die Extruderschnecke (3) umfaßt weiterhin einen zweiten Gewindeabschnitt (18), in welchem das Gangprofil so ausgerichtet ist, dass eine Rückförderung entgegen der Förderrichtung des ersten Gewindeabschnitts (17) erzielt wird. Der zweite Gewindeabschnitt (18) dient somit der Abdichtung auf der Antriebsseite des Extruders gegenüber dem Hauptförderstrom des Polymers.

Mit (19) ist ein aus dem Hauptförderstrom des Polymers abgezweigter Förderstrom bezeichnet, der über einen Bypass (14) und eine zweite Materialeinspeisung (20) in den Bereich des zweiten Gewindeabschnitts (18) des Extruderzylinders (2) eingespeist wird. Der Bypass kann außerhalb oder innerhalb des Extruderzylinders verlaufen. Über das aus dem Hauptförderstrom abgezweigte Polymer wird in dem Bereich des zweiten Gewindeabschnitts (18) der Extruderschnecke (3) eine ständige Rückspülung mit frischem Polymer bewirkt. In diesem Bereich wird das Polymer aus der Richtung des Getriebes (5) in Richtung des Extrudataustrags (13) gefördert. Somit werden dort keine Polymerreste stromabwärts des Extrudataustrags (13) verweilen können.

Wie aus der Zeichnung ersichtlich ist, ist der Extrudataustrag (13) im Bereich des stromabwärts gelegenen Endes des ersten Gewindeabschnitts (17) angeordnet.

Der Entgasungsextruder gemäß der Erfindung ist zweckmäßigerweise in bekannter Art und Weise beheizt. Dieser erstreckt sich in Gebrauchslage in liegender Anordnung, wie dies in den Zeichnungen dargestellt ist.

### Bezugszeichenliste

- 1: Entgasungsextruder
- 2: Extruderzylinder
- 3: Extruderschnecke
- 4: Antrieb
- 5: Getriebe
- 6: Speiseleitung
- 7: Einspeiseventile
- 8: Kondensatablauf
- 9: Entgasungszone
- 10: stromaufwärts gelegenes Ende des Entgasungsextruders
- 11: Kondensationskammer
- 12: Einsprühung
- 13: Extrudataustrag
- 14: Bypass
- 15: Dampfkanal
- 16: Gasaustritte
- 17: Erster Gewindeabschnitt
- 18: Zweiter Gewindeabschnitt
- 19: abgezweigter Polymerstrom
- 20: zweite Materialeinspeisung

## Patentansprüche

1. Entgasungsextruder (1) zur Entgasung eines Polymermaterials, umfassend wenigstens einen Antrieb, wenigstens einen Extruderzylinder (2), wenigstens eine drehbar angetriebene, in dem Extruderzylinder (2) gelagerte Extruderschnecke (3), wenigstens eine erste Materialeinspeisung (6), wenigstens einen Extrudataustrag (13), wenigstens eine Entgasungszone (9) und wenigstens einem Gasaustrag (16), in dem
der Antrieb im Bereich des, bezogen auf die Förderrichtung des Polymers, stromabwärts gelegenen Endes der Extruderschnecke (3) vorgesehen ist, undeine zweite Materialeinspeisung (20) in den Entgasungsextruder (1) im Bereich des stromabwärts gelegenen Endes vorgesehen ist,
wobei sich die zweite Materialeinspeisung (20) in den Entgasungsextruder (1) stromabwärts des Extrudataustrags (13) befindet,
**dadurch gekennzeichnet, dass**
die zweite Materialeinspeisung (20) ihre entgaste Schmelze durch einen im Bereich des Extrudataustrags (13) abgezweigten Teilstrom und/oder durch einen im Extruderzylinder (2) stromaufwärts des Extrudataustrags (13) abgezweigten Teilstrom und/oder durch einen aus der Extrudataustragsleitung abgezweigten Teilstrom erhält.

2. Entgasungsextruder nach Anspruch 1,
**dadurch gekennzeichnet, dass**
die Extruderschnecke (3) an ihrem stromabwärts gelegenen Ende angetrieben ist.

3. Entgasungsextruder nach einem der Ansprüche 1 bis 2,
**dadurch gekennzeichnet, dass**
der Extrudataustrag (13), bezogen auf die Längsachse des Extruders, radial und/oder tangential vorgesehen ist.

4. Entgasungsextruder nach einem der Ansprüche 1 bis 3,
**dadurch gekennzeichnet, dass**
der Extrudataustrag (13) stromaufwärts des Antriebs angeordnet ist.

5. Entgasungsextruder nach einem der Ansprüche 1 bis 4,
**dadurch gekennzeichnet, dass**
die Extruderschnecke (3) wenigstens zwei Bereiche entgegengesetzt fördernder Gangprofile aufweist.

6. Entgasungsextruder nach Anspruch 1,
**dadurch gekennzeichnet, dass**
der Extrudataustrag (13) am von der Einspeisestelle (6) stromabwärts liegenden Ende des stromabwärts fördernden Gewindeabschnitts (17) vorgesehen ist.

7. Entgasungsextruder nach einem der Ansprüche 1 bis 6,
**dadurch gekennzeichnet, dass**
die zweite Materialeinspeisung (20) von einem zweiten Extruder versorgt wird.

8. Entgasungsextruder nach einem der Ansprüche 1 bis 7,
**dadurch gekennzeichnet dass**
der Materialstrom der zweiten Materialeinspeisung (20) einstellbar ist.

9. Entgasungsextruder nach einem der Ansprüche 1 bis 8,
**dadurch gekennzeichnet, dass**
der Gasaustritt (16) für wenigstens einen Teil des bei der Entgasung anfallenden Gases stromaufwärts der ersten Materialeinspeisung (6) vorgesehen ist.

10. Entgasungsextruder nach einem der Ansprüche 1 bis 9,
**dadurch gekennzeichnet, dass**
im Bereich zwischen den entgegengesetzt geschnittenen und fördernden Schneckenprofilen ein Stauring und/oder eine Durchmesseränderung des Schneckenkerns vorgesehen ist.

## Claims

1. Vented extruder (1) for the devolatilization of a polymer material, encompassing at least one drive, at least one extruder barrel (2), at least one rotatably driven extruder screw (3) mounted in the extruder barrel (2), at least one first material feed (6), at least one extrudate outlet (13), at least one vent zone (9) and at least one gas outlet, in which
the drive has been provided in the region of that end of the extruder screw (3) that is downstream in relation to the direction of conveying of the polymer, and a second material feed (20) has been provided to the vented extruder (1) in the region of the downstream end, and the location of the second material feed (20) in the vented extruder (1) here is downstream of the extrudate outlet (13),
**characterized in that**
the second material feed (20) obtains its devolatilized melt via a substream diverted in the region of the extrudate outlet (13) and/or via a substream diverted in the extruder barrel (2) upstream of the extrudate outlet (13) and/or via a substream diverted from the extrudate-outlet line.

2. Vented extruder according to Claim 1,
**characterized in that**
the drive drives the downstream end of the extruder screw (3).

3. Vented extruder according to Claim 1 or 2,
**characterized in that**
the extrudate outlet (13) has been provided radially and/or tangentially, in relation to the longitudinal axis of the extruder.

4. Vented extruder according to any of Claims 1 to 3,
**characterized in that**
the extrudate outlet (13) is upstream of the drive.

5. Vented extruder according to any of Claims 1 to 4,
**characterized in that**
the extruder screw (3) has at least two regions of oppositely conveying channel profiles.

6. Vented extruder according to Claim 1,
**characterized in that**
the extrudate outlet (13) has been provided at that end of the downstream-conveying screw-thread section (17) that is downstream of the feed point (6) .

7. Vented extruder according to any of the Claims 1 to 6,
**characterized in that**
the second material feed (20) is supplied from a second extruder.

8. Vented extruder according to any of Claims 1 to 7,
**characterized in that**
the stream of material relating to the second material feed (20) is adjustable.

9. Vented extruder according to any of Claims 1 to 8,
**characterized in that**
the gas output (16) for at least a portion of the gas arising during the devolatilization process has been provided upstream of the first material feed (6).

10. Vented extruder according to any of Claims 1 to 9,
**characterized in that**
a restrictor ring and/or a change in diameter of the screw core has been provided in the region between the oppositely cut and conveying screw profiles.

## Revendications

1. Extrudeuse de dégazage (1) destinée au dégazage d'un matériau polymère, comprenant au moins un entraînement, au moins un cylindre d'extrusion (2), au moins une vis d'extrudeuse (3), laquelle est positionnée dans le cylindre d'extrusion (2) et laquelle est entraînée en rotation, au moins une première alimentation en matériau (6), au moins une sortie (13) de l'extrudat, au moins une zone de dégazage (9) et au moins une sortie (16) pour le gaz, dans laquelle extrudeuse de dégazage l'entraînement est prévu dans la zone de l'extrémité de la vis de l'extrudeuse (3) se trouvant en aval du flux, par rapport à la direction de convoyage du polymère, et une deuxième alimentation en matériau (20) est prévue dans l'extrudeuse de dégazage (1), dans la zone de l'extrémité se trouvant en aval du flux ;
selon laquelle la deuxième alimentation en matériau (20) se trouve dans l'extrudeuse de dégazage (1), en aval de la sortie (13) de l'extrudat ;
**caractérisée en ce que**
la deuxième alimentation en matériau (20) reçoit sa masse fondue dégazée par l'intermédiaire d'un flux partiel dérivé dans la zone de sortie (13) de l'extrudat et/ou par l'intermédiaire d'un flux partiel dérivé dans le cylindre d'extrusion (2), en amont de la sortie (13) de l'extrudat, et/ou par l'intermédiaire d'un flux partiel dérivé en dehors de la conduite de la sortie de l'extrudat.

2. Extrudeuse de dégazage selon la revendication 1,
**caractérisée en ce que**
la vis de l'extrudeuse (3) est entraînée au niveau de son extrémité qui se situe en aval du flux.

3. Extrudeuse de dégazage selon l'une des revendications 1 à 2,
**caractérisée en ce que**
la sortie (13) de l'extrudat est prévue de manière radiale et/ou tangentielle, par rapport à l'axe longitudinal de l'extrudeuse.

4. Extrudeuse de dégazage selon l'une des revendications 1 à 3,
**caractérisée en ce que**
la sortie (13) de l'extrudat est disposée en amont de l'entraînement.

5. Extrudeuse de dégazage selon l'une des revendications 1 à 4,
**caractérisée en ce que**
la vis de l'extrudeuse (3) présente au moins deux zones de profil de vitesse permettant un convoyage dans la direction opposée.

6. Extrudeuse de dégazage selon la revendication 1,
**caractérisée en ce que**
la sortie (13) de l'extrudat est prévue au niveau de l'extrémité, laquelle se trouve en aval du point d'alimentation (6), de la section filetée (17) qui assure le convoyage en aval du flux.

7. Extrudeuse de dégazage selon l'une des revendications 1 à 6,
**caractérisée en ce que**
la deuxième alimentation en matériau (20) est approvisionnée par une deuxième extrudeuse.

8. Extrudeuse de dégazage selon l'une des revendications 1 à 7,
**caractérisée en ce que**
le flux de matériau de la deuxième alimentation en matériau (20) peut être réglé.

9. Extrudeuse de dégazage selon l'une des revendications 1 à 8,
**caractérisée en ce que**
la sortie (16) pour le gaz est prévue pour au moins une partie du gaz qui est produit lors du dégazage, en amont de la première alimentation en matériau (6).

10. Extrudeuse de dégazage selon l'une des revendications 1 à 9,
**caractérisée en ce que**
une bague de retenue et/ou un changement de diamètre du noyau de la vis d'extrudeuse est ou sont prévus dans la zone qui est située entre les profils sectionnés et convoyants en opposition de la vis d'extrudeuse.
